(19) Europäisches Patentamt
European Patent Office
Office européen des brevets

(11) EP 4 197 805 B1

(12) EUROPEAN PATENT SPECIFICATION

(45) Date of publication and mention
of the grant of the patent:
**19.02.2025 Bulletin 2025/08**

(51) International Patent Classification (IPC):
*B60C 1/00* *(2006.01)*    *C08L 7/00* *(2006.01)*
*B60C 11/03* *(2006.01)*

(21) Application number: 22198565.8

(22) Date of filing: **29.09.2022**

(52) Cooperative Patent Classification (CPC):
(C-Sets available)
**C08L 7/00; B60C 1/0016;** B60C 2011/0355;
B60C 2200/06; Y02T 10/86                    (Cont.)

(54) **TIRE**

REIFEN

PNEUMATIQUE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.12.2021   JP 2021203408**

(43) Date of publication of application:
**21.06.2023   Bulletin 2023/25**

(73) Proprietor: **Sumitomo Rubber Industries, Ltd.
Kobe-shi, Hyogo 651-0072 (JP)**

(72) Inventors:
• **HATA, Kanako**
**Kobe-shi, 651-0072 (JP)**
• **TOMISAKI, Yukari**
**Kobe-shi, 651-0072 (JP)**
• **TSUCHIDA, Tsuyoshi**
**Kobe-shi, 651-0072 (JP)**

(74) Representative: **Manitz Finsterwald
Patent- und Rechtsanwaltspartnerschaft mbB
Martin-Greif-Strasse 1
80336 München (DE)**

(56) References cited:
**EP-A1- 3 623 420    US-A1- 2014 011 944**

(52) Cooperative Patent Classification (CPC): (Cont.)

C-Sets
**C08L 7/00, C08L 9/00, C08L 9/06, C08L 47/00, C08L 91/08, C08K 3/04, C08K 3/36, C08K 5/548, C08K 5/09, C08K 3/22, C08K 5/06, C08K 5/47, C08K 5/18;**

**C08L 7/00, C08L 9/06, C08L 25/16, C08L 91/08, C08K 3/04, C08K 3/36, C08K 5/548, C08K 5/09, C08K 3/22, C08K 5/06, C08K 5/47, C08K 5/18; C08L 7/00, C08L 9/06, C08L 47/00, C08L 91/08, C08K 3/04, C08K 3/36, C08K 5/548, C08K 5/09, C08K 3/22, C08K 5/06, C08K 5/47, C08K 5/18**

**Description**

TECHNICAL FIELD

The present invention relates to a tire.

BACKGROUND ART

An exemplary method for simultaneously providing abrasion resistance to a tire is to improve the order of introduction of chemicals in rubber mixing (for example, Patent Literature 1). However, in these days of well-developed automobile highways and increasingly sophisticated automobiles, repeated high-speed running is not uncommon, and therefore it is believed that there is room for further improvement in terms of abrasion resistance during high-speed running.

CITATION LIST

PATENT LITERATURE

Patent Literature 1: JP 2021-50355 A

SUMMARY OF INVENTION

TECHNICAL PROBLEM

The present invention aims to solve the above problem and provide a tire having an improved abrasion resistance during high-speed running.

SOLUTION TO PROBLEM

Although tire rubber properties greatly affect tire performance, not only the rubber properties but also tire shape (tread gauge, etc.) have a large influence on the development of tire performance. To improve the resistance to abrasion, which partially constitutes a fracture event, the amount of filler and its dispersion are important, and the reinforcement of a tire cannot be ensured unless at least a certain amount of filler is added. However, the amount of filler and abrasion resistance do not have a complete proportional relationship, and too much filler will deteriorate the performance.

In view of the above, the present invention was completed based on the finding that excellent abrasion resistance during high-speed running can be imparted to a tire by incorporating predetermined amounts of an isoprene-based rubber, a styrene-butadiene rubber, silica having a specific particle size, and a resin component while adjusting the polymer content PC and acetone extractable content AE of the rubber composition to specific ranges, and further that particularly excellent abrasion resistance during high-speed running can be imparted by further focusing on the tire shape to adjust the product of the thickness G of the tread portion measured on the equator in a cross-section taken in the radial direction of the tire and the polymer content PC to a predetermined value or more.

The present invention relates to a tire, including a tread portion,

the tread portion containing a rubber composition containing: rubber components including at least one isoprene-based rubber and at least one styrene-butadiene rubber; at least one silica having an average primary particle size of 15 nm or less; and at least one resin component,
the rubber composition containing the isoprene-based rubber in an amount of 50% by mass or more based on 100% by mass of the rubber components and the silica in an amount of 30 parts by mass or more per 100 parts by mass of the rubber components,
the tire satisfying the following relationships (1) and (2):

$$(1) \quad PC \geq 55.0\% \text{ by mass};$$

and

$$(2) \quad AE \leq 5.0\% \text{ by mass},$$

wherein PC and AE represent a polymer content (% by mass) and an acetone extractable content (% by mass), respectively, of the rubber composition.

ADVANTAGEOUS EFFECTS OF INVENTION

The tire of the present invention includes a tread portion containing a rubber composition which contains predetermined amounts of rubber components including an isoprene-based rubber and a styrene-butadiene rubber, silica having an average primary particle size of 15 nm or less, and a resin component, and satisfies relationships (1) and (2). Such a tire provides an improved abrasion resistance during high-speed running.

BRIEF DESCRIPTION OF DRAWINGS

FIG. 1 shows a cross-section of a part of a pneumatic tire according to one embodiment of the present invention taken in the meridional direction.
FIG. 2 shows an enlarged cross-section in the vicinity of a shoulder portion of the tire.

DESCRIPTION OF EMBODIMENTS

The present invention provides a tire including a tread portion containing a rubber composition which contains predetermined amounts of rubber components including an isoprene-based rubber and a styrene-butadiene rubber, silica having an average primary particle size of 15 nm or less, and a resin component, and satisfies relationships (1) and (2).
The mechanism of this advantageous effect is not clear but is believed to be as follows.
The formation of a polymer gel made of a polymer bound to a reinforcing agent is considered to be important to improve abrasion resistance. Thus, when a rubber composition contains silica having an average primary particle size of 15 nm or less and has a polymer content PC of 55.0% by mass or higher and an acetone extractable content AE reduced to 5.0% by mass or lower, shear deformation during rubber mixing can readily propagate so that the formation of a polymer gel made of the polymer component bound to the silica can be facilitated, and at the same time the proportion of the polymer gel in the rubber composition can be increased.
Further, the gel formation in the polymer components can be further facilitated by increasing the isoprene-based rubber content in the polymer components and also incorporating a styrene-butadiene rubber which is highly reactive with silica.
Moreover, the simultaneous incorporation of a resin component improves the compatibility between the isoprene-based rubber and styrene-butadiene rubber, so that the distribution of the silica to the polymers can be improved to improve the dispersion of the silica, thereby further facilitating the polymer gel formation.
Accordingly, it is believed that the present invention provides good abrasion resistance during high-speed running by making it possible to form a polymer gel in the tread portion and increase the proportion of the polymer gel.
Thus, the present tire solves the problem (purpose) of improving abrasion resistance during high-speed running by a formulation satisfying the relationship (1): $PC \geq 55.0\%$ by mass and the relationship (2): $AE \leq 5.0\%$ by mass, wherein PC and AE represent the polymer content (% by mass) and the acetone extractable content (% by mass), respectively, of the rubber composition contained in the tread portion. In other words, the parameters of the relationship (1): $PC \geq 55.0\%$ by mass and the relationship (2): $AE \leq 5.0\%$ by mass do not define the problem (purpose), and the problem herein is to improve abrasion resistance during high-speed running. In order to solve this problem, the tire has been formulated to satisfy the parameters.

<Tread rubber composition>

The tire of the present invention includes a tread portion which contains a tread rubber composition (vulcanized rubber composition) satisfying the following relationship (1):

$$(1) \quad PC \geq 55.0\% \text{ by mass}$$

wherein PC represents the polymer content (% by mass) of the rubber composition.
The lower limit of PC is preferably 57.0% by mass or higher, more preferably 58.0% by mass or higher, still more preferably 58.5% by mass or higher, particularly preferably 58.8% by mass or higher. The upper limit is preferably 85.0% by mass or lower, more preferably 80.0% by mass or lower, still more preferably 75.0% by mass or lower, particularly preferably 72.0% by mass or lower. When PC is within the range indicated above, a polymer gel can be formed, and at the same time the proportion of the polymer gel in the rubber composition can be increased. Thus, the advantageous effect tends to be better achieved.

The tire of the present invention includes a tread portion which contains a tread rubber composition (vulcanized rubber composition) satisfying the following relationship (2):

$$(2) \quad AE \leq 5.0\% \ by \ mass$$

wherein AE represents the acetone extractable content (% by mass) of the rubber composition.

The upper limit of AE is preferably 4.9% by mass or lower, more preferably 4.8% by mass or lower, still more preferably 4.5% by mass or lower, particularly preferably 4.2% by mass or lower. The lower limit is preferably 2.0% by mass or higher, more preferably 3.0% by mass or higher, still more preferably 3.3% by mass or higher, particularly preferably 3.5% by mass or higher. When AE is within the range indicated above, more shear energy can be obtained during mixing, thereby facilitating the polymer gel formation. Thus, the advantageous effect tends to be better achieved.

The tire of the present invention includes a tread portion which contains a tread rubber composition (vulcanized rubber composition) desirably satisfying the following relationship in order to better achieve the advantageous effect:

$$10.0\% \ by \ mass \leq Ash \leq 30.0\% \ by \ mass$$

wherein Ash represents the ash content (% by mass) of the rubber composition.

The lower limit of Ash is preferably 20.0% by mass or higher, more preferably 25.0% by mass or higher, still more preferably 26.0% by mass or higher, particularly preferably 26.6% by mass or higher. The upper limit is preferably 29.8% by mass or lower, more preferably 29.0% by mass or lower, still more preferably 28.0% by mass or lower. When Ash is within the range indicated above, the advantageous effect tends to be better achieved.

The tire of the present invention includes a tread portion which contains a tread rubber composition (vulcanized rubber composition) desirably satisfying the following relationship in order to better achieve the advantageous effect:

$$BC \leq 15.0\% \ by \ mass$$

wherein BC represents the carbon black content (% by mass) of the rubber composition.

The upper limit of BC is preferably 10.0% by mass or lower, more preferably 8.0% by mass or lower, still more preferably 6.5% by mass or lower, particularly preferably 6.0% by mass or lower. The lower limit is preferably 1.0% by mass or higher, more preferably 3.0% by mass or higher, still more preferably 4.0% by mass or higher, particularly preferably 4.5% by mass or higher. When BC is within the range indicated above, the advantageous effect tends to be better achieved.

Here, the polymer content (PC), acetone extractable content (AE), carbon black content (BC), and ash content (Ash) of the (vulcanized) rubber composition can be measured as described below.

First, the acetone extractable content (AE, unit: % by mass based on the rubber composition (sample)) of the rubber composition (sample) is measured by a method for measuring the acetone extractable content in accordance with JIS K 6229:2015.

The polymer content (PC, unit: % by mass based on the rubber composition (sample)) is calculated from the decrease in the amount (mass) of the sample remaining after the acetone extraction when it is heated (from room temperature to 750°C) in nitrogen for pyrolysis and gasification of organic matter in accordance with JIS K 6226-1:2003.

The carbon black content (BC, unit: % by mass based on the rubber composition (sample)) is calculated from the decrease in the amount (mass) of the sample after the pyrolysis and gasification when it is heated in the air for oxidative combustion.

The ash content (Ash, unit: % by mass based on the rubber composition (sample)) is calculated from the mass of the components which remain unburned in the oxidative combustion (ash).

Here, the sample used in the measurements is collected from the tread portion of the tire.

AE, PC, BC, and Ash may be controlled by methods known to those skilled in the art. For example, AE tends to increase as the amount of softeners such as oils in the rubber composition increases. PC tends to increase as the amount of elastomer components in the rubber composition increases. BC tends to increase as the amount of carbon black in the rubber composition increases. Ash tends to increase as the amount of components which remain unburned in oxidative combustion, such as silica, in the rubber composition increases.

The tread rubber composition contains rubber components including an isoprene-based rubber and a styrene-butadiene rubber (SBR).

The rubber components in the rubber composition contribute to cross-linking and generally correspond to polymers having a weight average molecular weight (Mw) of 10,000 or more.

The weight average molecular weight of the rubber components is preferably 50,000 or more, more preferably 150,000 or more, still more preferably 200,000 or more, but is preferably 2,000,000 or less, more preferably 1,500,000 or less, still more preferably 1,000,000 or less. When the weight average molecular weight is within the range indicated above, the advantageous effect tends to be better achieved.

Herein, the weight average molecular weight (Mw) can be determined by gel permeation chromatography (GPC) (GPC-8000 series available from Tosoh Corporation, detector: differential refractometer, column: TSKGEL SUPERMULTIPORE HZ-M available from Tosoh Corporation) calibrated with polystyrene standards.

Examples of isoprene-based rubbers include natural rubbers (NR), polyisoprene rubbers (IR), refined NR, modified NR, and modified IR. Examples of NR include those commonly used in the tire industry such as SIR20, RSS#3, and TSR20. Any IR may be used, including for example those commonly used in the tire industry such as IR2200. Examples of refined NR include deproteinized natural rubbers (DPNR) and highly purified natural rubbers (UPNR). Examples of modified NR include epoxidized natural rubbers (ENR), hydrogenated natural rubbers (HNR), and grafted natural rubbers. Examples of modified IR include epoxidized polyisoprene rubbers, hydrogenated polyisoprene rubbers, and grafted polyisoprene rubbers. These may be used alone or in combinations of two or more. NR is preferred among these.

The amount of isoprene-based rubbers based on 100% by mass of the rubber components in the rubber composition is 50% by mass or more, preferably 70% by mass or more, more preferably 80% by mass or more, still more preferably 85% by mass or more, particularly preferably 90% by mass or more. The upper limit is preferably 98% by mass or less, more preferably 95% by mass or less. When the amount is within the range indicated above, the advantageous effect tends to be better achieved.

Any SBR may be used, and examples include emulsion-polymerized styrene-butadiene rubbers (E-SBR) and solution-polymerized styrene-butadiene rubbers (S-SBR). Hydrogenated SBR may also be used in which the double bonds of the butadiene portions are appropriately hydrogenated. Examples of commercial products include those available from Sumitomo Chemical Co., Ltd., JSR Corporation, Asahi Kasei Corporation, Zeon Corporation, etc.

The styrene content of the SBR is preferably 5% by mass or higher, more preferably 10% by mass or higher, still more preferably 15% by mass or higher, particularly preferably 20% by mass or higher. The styrene content is preferably 50% by mass or lower, more preferably 40% by mass or lower, still more preferably 30% by mass or lower. When the styrene content is within the range indicated above, the advantageous effect tends to be better achieved.

Herein, the styrene content of the SBR can be determined by $^1$H-NMR analysis.

The vinyl content of the SBR is preferably 10 mol% or higher, more preferably 20 mol% or higher, still more preferably 30 mol% or higher. The vinyl content is preferably 90 mol% or lower, more preferably 80 mol% or lower, still more preferably 70 mol% or lower. When the vinyl content is within the range indicated above, the advantageous effect tends to be better achieved.

Herein, the vinyl content (1,2-butadiene unit content) of the SBR can be measured by infrared absorption spectrometry.

The amount of SBR based on 100% by mass of the rubber components in the rubber composition is preferably 3% by mass or more, more preferably 7% by mass or more, but is preferably 30% by mass or less, more preferably 20% by mass or less, still more preferably 15% by mass or less, particularly preferably 10% by mass or less. When the amount is within the range indicated above, the advantageous effect tends to be better achieved.

The combined amount of isoprene-based rubbers and SBR based on 100% by mass of the rubber components in the rubber composition is preferably 70% by mass or more, more preferably 90% by mass or more, still more preferably 95% by mass or more, and may be 100% by mass. When the combined amount is within the range indicated above, the advantageous effect tends to be better achieved.

Usable rubber components other than isoprene-based rubbers and SBR are not limited and include those known in the tire field. Examples include diene rubbers such as polybutadiene rubbers (BR), acrylonitrile-butadiene rubbers (NBR), chloroprene rubbers (CR), butyl rubbers (IIR), and styrene-isoprene-butadiene copolymer rubbers (SIBR). Each of these may be used alone, or two or more of these may be used in combination. To better achieve the advantageous effect, BR is preferred among these.

Any BR may be used, and examples include those commonly used in the tire industry, including: high cis BR such as BR1220 available from Zeon Corporation, BR150B available from Ube Industries, Ltd., and BR1280 available from LG Chem; BR containing 1,2-syndiotactic polybutadiene crystals (SPB) such as VCR412 and VCR617 both available from Ube Industries, Ltd.; and polybutadiene rubbers synthesized using rare earth catalysts (rare earth-catalyzed BR). Each of these may be used alone, or two or more of these may be used in combination.

The cis content of the BR is preferably 80% by mass or higher, more preferably 85% by mass or higher, still more preferably 90% by mass or higher, but is preferably 99% by mass or lower, more preferably 98% by mass or lower, still more preferably 97% by mass or lower. When the cis content is within the range indicated above, the advantageous effect tends to be better achieved.

Here, the cis content of the BR can be measured by infrared absorption spectrometry.

When the rubber composition contains BR, the amount of BR based on 100% by mass of the rubber components is preferably 3% by mass or more, more preferably 7% by mass or more, but is preferably 30% by mass or less, more preferably 20% by mass or less, still more preferably 15% by mass or less, particularly preferably 10% by mass or less. When the amount is within the range indicated above, the advantageous effect tends to be better achieved.

The rubber components may include oil extended rubbers prepared by oil extension. These may be used alone or in combinations of two or more. The oils used in oil extended rubbers may be as described later. Moreover, the oil content of the oil extended rubbers is not limited but is usually about 10 to 50 parts by mass per 100 parts by mass of the rubber solids content.

The rubber components may be modified to introduce therein a functional group interactive with filler such as silica.

Examples of the functional group include a silicon-containing group ($-SiR_3$ where each R is the same or different and represents a hydrogen atom, a hydroxy group, a hydrocarbon group, an alkoxy group, or the like), an amino group, an amide group, an isocyanate group, an imino group, an imidazole group, a urea group, an ether group, a carbonyl group, an oxycarbonyl group, a mercapto group, a sulfide group, a disulfide group, a sulfonyl group, a sulfinyl group, a thiocarbonyl group, an ammonium group, an imide group, a hydrazo group, an azo group, a diazo group, a carboxy group, a nitrile group, a pyridyl group, an alkoxy group, a hydroxy group, an oxy group, and an epoxy group, each of which may be substituted. Preferred among these is a silicon-containing group. More preferred is - $SiR_3$ where each R is the same or different and represents a hydrogen atom, a hydroxy group, a hydrocarbon group (preferably a C1-C6 hydrocarbon group, more preferably a C1-C6 alkyl group), or an alkoxy group (preferably a C1-C6 alkoxy group), and at least one R is a hydroxy group.

Specific examples of the compound (modifier) used to introduce the functional group include 2-dimethylaminoethyltrimethoxysilane, 3-dimethylaminopropyltrimethoxysilane, 2-dimethylaminoethyltriethoxysilane, 3-dimethylaminopropyltriethoxysilane, 2-diethylaminoethyltrimethoxysilane, 3-diethylaminopropyltrimethoxysilane, 2-diethylaminoethyltriethoxysilane, and 3-diethylaminopropyltriethoxysilane.

The rubber composition contains silica having an average primary particle size of 15 nm or less (hereinafter, also referred to as "fine particle silica").

The average primary particle size is preferably 14 nm or less, more preferably 13 nm or less, still more preferably 12 nm or less. The lower limit is preferably 8 nm or more, more preferably 9 nm or more, still more preferably 10 nm or more. When the average primary particle size is within the range indicated above, the advantageous effect tends to be better achieved.

Here, the average primary particle size can be determined by measuring the particle sizes of at least 400 primary particles of silica observed in the visual field of a transmission or scanning electron microscope and averaging them.

The nitrogen adsorption specific surface area ($N_2SA$) of the fine particle silica is preferably 200 $m^2$/g or more, more preferably 210 $m^2$/g or more, still more preferably 220 $m^2$/g or more, particularly preferably 230 $m^2$/g or more. The upper limit is not limited but is preferably 600 $m^2$/g or less, more preferably 350 $m^2$/g or less, still more preferably 260 $m^2$/g or less. When the $N_2SA$ is within the range indicated above, the advantageous effect tends to be better achieved.

Here, the $N_2SA$ of the silica is measured by a BET method in accordance with ASTM D3037-93.

The amount of fine particle silica per 100 parts by mass of the rubber components in the rubber composition is 30 parts by mass or more, preferably 35 parts by mass or more, more preferably 40 parts by mass or more, still more preferably 45 parts by mass or more. The upper limit of the amount is preferably 80 parts by mass or less, more preferably 70 parts by mass or less, still more preferably 65 parts by mass or less, particularly preferably 60 parts by mass or less. When the amount is within the range indicated above, the advantageous effect tends to be better achieved.

The rubber composition may contain silica other than the fine particle silica.

The total amount of silica (the combined amount of fine particle silica and silica other than fine particle silica) per 100 parts by mass of the rubber components in the rubber composition is 30 parts by mass or more, preferably 35 parts by mass or more, more preferably more than 40 parts by mass, still more preferably 45 parts by mass or more. The upper limit of the total amount is preferably 80 parts by mass or less, more preferably 70 parts by mass or less, still more preferably 65 parts by mass or less, particularly preferably 60 parts by mass or less. When the total amount is within the range indicated above, the advantageous effect tends to be better achieved.

Examples of usable silica include dry silica (anhydrous silica) and wet silica (hydrous silica). Wet silica is preferred among these because it contains a large number of silanol groups. Moreover, besides such anhydrous silica and hydrous silica, silica produced from biomass materials such as rice husks may be appropriately used. Usable commercial products are available from Degussa, Rhodia, Tosoh Silica Corporation, Solvay Japan, Tokuyama Corporation, etc. These may be used alone or in combinations of two or more.

The rubber composition which contains silica preferably further contains a silane coupling agent.

Any silane coupling agent may be used, including those known in the rubber field. Examples include sulfide silane coupling agents such as bis(3-triethoxysilylpropyl)tetrasulfide, bis(2-triethoxysilylethyl)tetrasulfide, bis(4-triethoxysilylbutyl)tetrasulfide, bis(3-trimethoxysilylpropyl)tetrasulfide, bis(2-trimethoxysilylethyl)tetrasulfide, bis(2-triethoxysilylethyl)trisulfide, bis(4-trimethoxysilylbutyl)trisulfide, bis(3-triethoxysilylpropyl)disulfide, bis(2-triethoxysilylethyl)disulfide, bis(4-triethoxysilylbutyl)disulfide, bis(3-trimethoxysilylpropyl)disulfide, bis(2-trimethoxysilylethyl)disulfide, bis(4-trimethoxysilylbutyl)disulfide, 3-trimethoxysilylpropyl-N,N-dimethylthiocarbamoyltetrasulfide, 2-triethoxysilylethyl-N,N-dimethylthiocarbamoyltetrasulfide, and 3-triethoxysilylpropyl methacrylate monosulfide; mercapto silane coupling agents such as 3-mercaptopropyltrimethoxysilane, 2-mercaptoethyltriethoxysilane, and NXT and NXT-Z both available from Momentive; vinyl silane coupling agents such as vinyltriethoxysilane and vinyltrimethoxysilane; amino silane coupling agents such as 3-aminopropyltriethoxysilane and 3-aminopropyltrimethoxysilane; glycidoxy silane coupling agents such as γ-glycidoxypropyltriethoxysilane and γ-glycidoxypropyltrimethoxysilane; nitro silane coupling agents such as 3-nitropropyltrimethoxysilane and 3-nitropropyltriethoxysilane; and chloro silane coupling agents such as 3-chloropropyltrimethoxysilane and 3-chloropropyltriethoxysilane. Usable commercial products are available from Degussa, Momentive, Shin-Etsu Silicone, Tokyo Chemical Industry Co., Ltd., AZmax. Co., Dow Corning Toray Co., Ltd., etc. These may be used alone or in combinations of two or more.

The amount of silane coupling agents per 100 parts by mass of the silica in the rubber composition is preferably 0.1 parts by mass or more, more preferably 3 parts by mass or more, still more preferably 5 parts by mass or more, particularly preferably 7 parts by mass or more. The upper limit of the amount is preferably 50 parts by mass or less, more preferably 20 parts by mass or less, still more preferably 15 parts by mass or less, particularly preferably 10 parts by mass or less. When the amount is within the range indicated above, the advantageous effect tends to be better achieved.

The rubber composition may contain fillers other than silica.

Any filler other than silica may be used, including materials known in the rubber field. Examples include inorganic fillers such as carbon black, calcium carbonate, talc, alumina, clay, aluminum hydroxide, aluminum oxide, and mica. Among these, carbon black is preferred in order to better achieve the advantageous effect.

Any carbon black may be used in the rubber composition, and examples include N134, N110, N220, N234, N219, N339, N330, N326, N351, N550, and N762. Besides such carbon black produced by burning mineral oils, carbon black produced by burning biomass-derived materials such as lignin may also be appropriately used. Usable commercial products are available from Asahi Carbon Co., Ltd., Cabot Japan K.K., Tokai Carbon Co., Ltd., Mitsubishi Chemical Corporation, Lion Corporation, NIPPON STEEL Carbon Co., Ltd., Columbia Carbon, etc. These may be used alone or in combinations of two or more.

The nitrogen adsorption specific surface area ($N_2SA$) of the carbon black is preferably 30 $m^2/g$ or more, more preferably 50 $m^2/g$ or more, still more preferably 70 $m^2/g$ or more. The $N_2SA$ is also preferably 200 $m^2/g$ or less, more preferably 150 $m^2/g$ or less, still more preferably 130 $m^2/g$ or less, further preferably 120 $m^2/g$ or less. When the $N_2SA$ is within the range indicated above, the advantageous effect tends to be better achieved.

The amount of carbon black per 100 parts by mass of the rubber components in the rubber composition is preferably 1 part by mass or more, more preferably 3 parts by mass or more, still more preferably 5 parts by mass or more. The upper limit of the amount is preferably 30 parts by mass or less, more preferably 15 parts by mass or less, still more preferably 10 parts by mass or less. When the amount is within the range indicated above, the advantageous effect tends to be better achieved.

The percentage of silica based on 100% by mass of the fillers contained in the rubber composition is preferably 50% by mass or higher, more preferably 60% by mass or higher, still more preferably 75% by mass or higher, particularly preferably 80% by mass or higher. The upper limit is not limited but is preferably 95% by mass or lower, more preferably 92% by mass or lower, still more preferably 90% by mass or lower. When the percentage of silica is within the range indicated above, the advantageous effect tends to be better achieved.

The amount of fillers (the total amount of fillers including fine particle silica, other silica, carbon black, etc.) per 100 parts by mass of the rubber components in the rubber composition is preferably 10 parts by mass or more, more preferably 35 parts by mass or more, still more preferably 50 parts by mass or more, particularly preferably 55 parts by mass or more. The upper limit of the amount is preferably 100 parts by mass or less, more preferably 90 parts by mass or less, still more preferably 80 parts by mass or less, particularly preferably 70 parts by mass or less. When the amount is within the range indicated above, the advantageous effect tends to be better achieved.

The rubber composition contains a resin component.

The resin component may be either a liquid resin which is liquid at room temperature (25°C) or a solid resin which is solid at room temperature (25°C). Among these, the solid resin is desirable in order to better achieve the advantageous effect.

The amount of resin components (the combined amount of liquid resins which are liquid at 25°C and solid resins which are solid at 25°C) per 100 parts by mass of the rubber components in the rubber composition is preferably 1.0 parts by mass or more, more preferably 1.5 parts by mass or more, still more preferably 2.0 parts by mass or more. The upper limit is preferably 20.0 parts by mass or less, more preferably 10.0 parts by mass or less, still more preferably 5.0 parts by mass or less. When the amount is within the range indicated above, the advantageous effect tends to be better achieved.

Examples of the solid resins include petroleum resins, terpene resins, aromatic vinyl polymers, coumarone-indene resins, coumarone resins, indene resins, phenol resins, rosin resins, and acrylic resins, all of which are solid at room temperature (25°C). These resin components may also be hydrogenated. These may be used alone or in combinations of two or more. Petroleum resins, terpene resins, and aromatic vinyl polymers are preferred among these.

The softening point of the resin components is preferably 80°C or higher, more preferably 83°C or higher, still more preferably 85°C or higher. The upper limit is preferably 150°C or lower, more preferably 120°C or lower, still more preferably 110°C or lower. When the softening point is within the range indicated above, the advantageous effect tends to be better achieved.

Here, the softening point of the resin components is determined as set forth in JIS K 6220-1:2001 using a ring and ball softening point measuring apparatus and defined as the temperature at which the ball drops down. Moreover, the softening point of the resin components is usually higher by about 50°C ± 5°C than the glass transition temperature of the resin components.

Examples of the petroleum resins include C5 resins, C9 resins, C5/C9 resins, and dicyclopentadiene (DCPD) resins. Hydrogenated products of these resins are also usable.

The terpene resins refer to polymers containing terpenes as structural units. Examples include polyterpene resins produced by polymerizing terpene compounds, and aromatic modified terpene resins produced by polymerizing terpene compounds and aromatic compounds. Hydrogenated products of these resins are also usable.

The polyterpene resins refer to resins produced by polymerizing terpene compounds. The terpene compounds refer to hydrocarbons having a composition represented by $(C_5H_8)_n$ or oxygen-containing derivatives thereof, each of which has a terpene backbone and is classified as a monoterpene ($C_{10}H_{16}$), sesquiterpene ($C_{15}H_{24}$), diterpene ($C_{20}H_{32}$), or other terpene. Examples of the terpene compounds include $\alpha$-pinene, $\beta$-pinene, dipentene, limonene, myrcene, alloocimene, ocimene, $\alpha$-phellandrene, $\alpha$-terpinene, $\gamma$-terpinene, terpinolene, 1,8-cineole, 1,4-cineole, $\alpha$-terpineol, $\beta$-terpineol, and $\gamma$-terpineol.

Examples of the polyterpene resins include resins made from the above-mentioned terpene compounds, such as pinene resins, limonene resins, dipentene resins, and pinene-limonene resins. Pinene resins are preferred among these. Pinene resins, which usually contain two isomers, $\alpha$-pinene and $\beta$-pinene, are classified as $\beta$-pinene resins mainly containing $\beta$-pinene and $\alpha$-pinene resins mainly containing $\alpha$-pinene, depending on the proportions of the components in the resins.

Examples of the aromatic modified terpene resins include terpene-phenol resins made from the above-mentioned terpene compounds and phenolic compounds, and terpene-styrene resins made from the above-mentioned terpene compounds and styrene compounds. Terpene-phenol-styrene resins made from the terpene compounds, phenolic compounds, and styrene compounds are also usable. Here, examples of the phenolic compounds include phenol, bisphenol A, cresol, and xylenol, and examples of the styrene compounds include styrene and $\alpha$-methylstyrene.

The aromatic vinyl polymers refer to polymers containing aromatic vinyl monomers as structural units. Examples include resins produced by polymerizing $\alpha$-methylstyrene and/or styrene. Specific examples include styrene homopolymers (styrene resins), $\alpha$-methylstyrene homopolymers ($\alpha$-methylstyrene resins), copolymers of $\alpha$-methylstyrene and styrene, and copolymers of styrene and other monomers.

The coumarone-indene resins refer to resins containing coumarone and indene as the main monomer components forming the skeleton (backbone) of the resins. Examples of monomer components which may be contained in the skeleton in addition to coumarone and indene include styrene, $\alpha$-methylstyrene, methylindene, and vinyltoluene.

The coumarone resins refer to resins containing coumarone as the main monomer component forming the skeleton (backbone) of the resins.

The indene resins refer to resins containing indene as the main monomer component forming the skeleton (backbone) of the resins.

Examples of the phenol resins include known polymers produced by reaction of phenol with aldehydes such as formaldehyde, acetaldehyde, or furfural using acid or alkali catalysts. Preferred among these are those produced by reaction using acid catalysts (e.g., novolac-type phenol resins).

Examples of the rosin resins include rosin-based resins typified by natural rosins, polymerized rosins, modified rosins, and esterified compounds thereof, and hydrogenated products thereof.

The acrylic resins refer to polymers containing acrylic monomers as structural units. Examples include styrene acrylic resins such as those which contain carboxy groups and are produced by copolymerizing aromatic vinyl monomer components and acrylic monomer components. Solvent-free, carboxy group-containing styrene acrylic resins are suitable among these.

The solvent-free, carboxy group-containing styrene acrylic resins may be (meth)acrylic resins (polymers) synthesized by high temperature continuous polymerization (high temperature continuous bulk polymerization as described in, for example, US Patent No. 4,414,370, JP S59-6207 A, JP H5-58005 B, JP H1-313522 A, US Patent No. 5,010,166, and annual research report TREND 2000 issued by Toagosei Co., Ltd., vol. 3, pp. 42-45) using no or minimal amounts of auxiliary raw materials such as polymerization initiators, chain transfer agents, and organic solvents. Herein, the term "(meth)acrylic" means methacrylic and acrylic.

Examples of the acrylic monomer components of the acrylic resins include (meth)acrylic acid and (meth)acrylic acid derivatives such as (meth)acrylic acid esters (e.g., alkyl esters, aryl esters, and aralkyl esters, such as 2-ethylhexyl acrylate), (meth)acrylamide, and (meth)acrylamide derivatives. Here, the term "(meth)acrylic acid" is a general term for acrylic acid and methacrylic acid.

Examples of the aromatic vinyl monomer components of the acrylic resins include aromatic vinyls such as styrene, $\alpha$-methylstyrene, vinyltoluene, vinylnaphthalene, divinylbenzene, trivinylbenzene, and divinylnaphthalene.

In addition to the (meth)acrylic acid or (meth)acrylic acid derivatives and aromatic vinyls, other monomer components may also be used as the monomer components of the acrylic resins.

The amount of solid resins per 100 parts by mass of the rubber components in the rubber composition is preferably 1.0 parts by mass or more, more preferably 1.5 parts by mass or more, still more preferably 2.0 parts by mass or more. The upper limit is preferably 20.0 parts by mass or less, more preferably 10.0 parts by mass or less, still more preferably 5.0 parts by mass or less. When the amount is within the range indicated above, the advantageous effect tends to be better achieved. Here, the amount of petroleum resins, the amount of terpene resins, and the amount of aromatic vinyl polymers are each also desirably within the range as indicated above.

Examples of the liquid resins include terpene resins (including terpene-phenol resins and aromatic modified terpene resins), rosin resins, styrene resins, C5 resins, C9 resins, C5/C9 resins, dicyclopentadiene (DCPD) resins, coumarone-indene resins (including resins based on coumarone or indene alone), phenol resins, olefin resins, polyurethane resins, and acrylic resins, all of which are liquid at room temperature (25°C). Hydrogenated products of these resins are also usable.

The amount of liquid resins per 100 parts by mass of the rubber components in the rubber composition is preferably 1.0 parts by mass or more, more preferably 1.5 parts by mass or more, still more preferably 2.0 parts by mass or more. The upper limit is preferably 20.0 parts by mass or less, more preferably 10.0 parts by mass or less, still more preferably 5.0 parts by mass or less. When the amount is within the range indicated above, the advantageous effect tends to be better achieved.

Besides the above-mentioned resin components, the rubber composition may contain other plasticizers capable of imparting plasticity to rubber components. Examples of such other plasticizers include liquid plasticizers (plasticizers which are liquid at 25°C) other than the liquid resins and solid plasticizers (plasticizers which are solid at 25°C) other than the solid resins. These plasticizers may be used alone or in combinations of two or more.

The total amount of plasticizers (the combined amount of liquid resins and other liquid plasticizers, and solid resins and other solid plasticizers) per 100 parts by mass of the rubber components in the rubber composition is preferably 1.0 parts by mass or more, more preferably 1.5 parts by mass or more, still more preferably 2.0 parts by mass or more. The upper limit is preferably 20.0 parts by mass or less, more preferably 10.0 parts by mass or less, still more preferably 5.0 parts by mass or less. When the amount is within the range indicated above, the advantageous effect tends to be better achieved.

Non-limiting examples of the above-mentioned other liquid plasticizers (plasticizers which are liquid at room temperature (25°C)) include oils and liquid polymers other than the liquid resins, such as liquid diene polymers and liquid farnesene polymers. Oils are desirable among these. These may be used alone or in combinations of two or more.

When the rubber composition contains the above-mentioned other liquid plasticizers, the amount of the other liquid plasticizers per 100 parts by mass of the rubber components is preferably 5.0 parts by mass or less, more preferably 2.0 parts by mass or less, still more preferably 1.0 parts by mass or less, and may be 0 parts by mass. The amount of oils is also desirably within the range as indicated above. Here, the amount of liquid plasticizers includes the amount of the oils contained in extender oils.

Examples of oils include process oils, plant oils, and mixtures thereof. Examples of process oils include paraffinic process oils, aromatic process oils, and naphthenic process oils. Examples of plant oils include castor oil, cotton seed oil, linseed oil, rapeseed oil, soybean oil, palm oil, coconut oil, peanut oil, rosin, pine oil, pine tar, tall oil, corn oil, rice oil, safflower oil, sesame oil, olive oil, sunflower oil, palm kernel oil, camellia oil, jojoba oil, macadamia nut oil, and tung oil. In addition to these oils, oils after being used as lubricating oils in mixers for processing rubber, engines, or other applications, or oils obtained by purifying waste cooking oils used in cooking establishments may also be appropriately used from the standpoint of life cycle assessment.

Examples of liquid diene polymers include liquid styrene-butadiene copolymers (liquid SBR), liquid polybutadiene polymers (liquid BR), liquid polyisoprene polymers (liquid IR), liquid styrene-isoprene copolymers (liquid SIR), liquid styrene-butadiene-styrene block copolymers (liquid SBS block polymers), liquid styrene-isoprene-styrene block copolymers (liquid SIS block polymers), liquid farnesene polymers, and liquid farnesene-butadiene copolymers, all of which are liquid at 25°C. These polymers may be modified at the chain end or backbone with a polar group. Hydrogenated products of these polymers are also usable.

The above-mentioned other solid plasticizers (plasticizers which are solid at 25°C) may be materials other than the solid resins which are capable of imparting plasticity to rubber components.

The plasticizers may be commercially available from, for example, Maruzen Petrochemical Co., Ltd., Sumitomo Bakelite Co., Ltd., Yasuhara Chemical Co., Ltd., Tosoh Corporation, Rutgers Chemicals, BASF, Arizona Chemical, Nitto Chemical Co., Ltd., Nippon Shokubai Co., Ltd., ENEOS Corporation, Arakawa Chemical Industries, Ltd., Taoka Chemical Co., Ltd., etc.

The rubber composition may contain an antioxidant.

Examples of antioxidants include naphthylamine antioxidants such as phenyl-$\alpha$-naphthylamine; diphenylamine antioxidants such as octylated diphenylamine and 4,4'-bis($\alpha,\alpha$'-dimethylbenzyl)diphenylamine; p-phenylenediamine antioxidants such as N-isopropyl-N'-phenyl-p-phenylenediamine, N-(1,3-dimethylbutyl)-N'-phenyl-p-phenylenediamine, and N,N'-di-2-naphthyl-p-phenylenediamine; quinoline antioxidants such as polymerized 2,2,4-trimethyl-1,2-dihydroquinoline; monophenolic antioxidants such as 2,6-di-t-butyl-4-methylphenol and styrenated phenol; and bis-, tris-, or polyphenolic antioxidants such as tetrakis[methylene-3-(3',5'-di-t-butyl-4'-hydroxyphenyl)propionate]methane. Usable commercial products are available from Seiko Chemical Co., Ltd., Sumitomo Chemical Co., Ltd., Ouchi Shinko Chemical Industrial Co., Ltd., Flexsys, etc. Each of these may be used alone, or two or more of these may be used in combination.

The amount of antioxidants per 100 parts by mass of the rubber components in the rubber composition is preferably 0.5 parts by mass or more, more preferably 1.5 parts by mass or more, still more preferably 2.0 parts by mass or more, but is preferably 10.0 parts by mass or less, more preferably 6.0 parts by mass or less, still more preferably 4.0 parts by mass or less. When the amount is within the range indicated above, the advantageous effect tends to be better achieved.

The rubber composition may contain a wax.

Any wax may be used, and examples include petroleum waxes such as paraffin waxes and microcrystalline waxes; and synthetic waxes such as polymers of ethylene, propylene, or other similar monomers. Usable commercial products are available from Ouchi Shinko Chemical Industrial Co., Ltd., Nippon Seiro Co., Ltd., Seiko Chemical Co., Ltd., etc. Each of these may be used alone, or two or more of these may be used in combination.

The amount of waxes per 100 parts by mass of the rubber components in the rubber composition is preferably 1 part by mass or more, more preferably 2 parts by mass or more, but is preferably 10 parts by mass or less, more preferably 6 parts by mass or less. When the amount is within the range indicated above, the advantageous effect tends to be better achieved.

The rubber composition may contain stearic acid.

Conventional stearic acid may be used. Usable commercial products are available from NOF Corporation, Kao Corporation, FUJIFILM Wako Pure Chemical Corporation, Chiba Fatty Acid Co., Ltd., etc. Each of these may be used alone, or two or more of these may be used in combination.

The amount of stearic acid per 100 parts by mass of the rubber components in the rubber composition is preferably 0.5 parts by mass or more, more preferably 0.8 parts by mass or more, still more preferably 1.0 parts by mass or more, but is preferably 10.0 parts by mass or less, more preferably 6.0 parts by mass or less. When the amount is within the range indicated above, the advantageous effect tends to be better achieved.

The rubber composition may contain zinc oxide.

Conventional zinc oxide may be used. Usable commercial products are available from Mitsui Mining & Smelting Co., Ltd., Toho Zinc Co., Ltd., HakusuiTech Co., Ltd., Seido Chemical Industry Co., Ltd., Sakai Chemical Industry Co., Ltd., etc. Each of these may be used alone, or two or more of these may be used in combination.

The amount of zinc oxide per 100 parts by mass of the rubber components in the rubber composition is preferably 0.5 parts by mass or more, more preferably 1.0 parts by mass or more, still more preferably 2.0 parts by mass or more, but is preferably 10.0 parts by mass or less, more preferably 6.0 parts by mass or less. When the amount is within the range indicated above, the advantageous effect tends to be better achieved.

The rubber composition may contain sulfur.

Examples of sulfur include those commonly used as crosslinking agents in the rubber industry, such as powdered sulfur, precipitated sulfur, colloidal sulfur, insoluble sulfur, highly dispersible sulfur, and soluble sulfur. Usable commercial products are available from Tsurumi Chemical Industry Co., Ltd., Karuizawa sulfur Co., Ltd., Shikoku Chemicals Corporation, Flexsys, Nippon Kanryu Industry Co., Ltd., Hosoi Chemical Industry Co., Ltd., etc. These may be used alone or in combinations of two or more.

The amount of sulfur per 100 parts by mass of the rubber components in the rubber composition is preferably 0.5 parts by mass or more, more preferably 1.5 parts by mass or more, still more preferably 2.0 parts by mass or more, but is preferably 3.5 parts by mass or less, more preferably 3.0 parts by mass or less, still more preferably 2.8 parts by mass or less. When the amount is within the range indicated above, the advantageous effect tends to be better achieved.

The rubber composition may contain a vulcanization accelerator.

Examples of vulcanization accelerators include thiazole vulcanization accelerators such as 2-mercaptobenzothiazole and di-2-benzothiazolyl disulfide; thiuram vulcanization accelerators such as tetramethylthiuram disulfide (TMTD) and tetrakis(2-ethylhexyl)thiuram disulfide (TOT-N); sulfenamide vulcanization accelerators such as N-cyclohexyl-2-benzothiazylsulfenamide (CBS), N-tert-butyl-2-benzothiazolylsulfenamide (TBBS), N-oxyethylene-2-benzothiazole sulfenamide, and N,N'-diisopropyl-2-benzothiazole sulfenamide; and guanidine vulcanization accelerators such as diphenylguanidine, diorthotolylguanidine, and orthotolylbiguanidine. Usable commercial products are available from Sumitomo Chemical Co., Ltd., Ouchi Shinko Chemical Industrial Co., Ltd., etc. These may be used alone or in combinations of two or more.

The amount of vulcanization accelerators per 100 parts by mass of the rubber components in the rubber composition is preferably 1.0 parts by mass or more, more preferably 1.5 parts by mass or more, still more preferably 2.0 parts by mass or more, but is preferably 10.0 parts by mass or less, more preferably 7.0 parts by mass or less, still more preferably 5.0 parts by mass or less. When the amount is within the range indicated above, the advantageous effect tends to be better achieved.

In addition to the above-mentioned components, the rubber composition may further contain additives commonly used in the tire industry, such as organic peroxides. The amounts of such additives are each preferably 0.1 to 200 parts by mass per 100 parts by mass of the rubber components.

The rubber composition may be prepared, for example, by kneading the above-mentioned components using a rubber kneading machine such as an open roll mill or a Banbury mixer and then vulcanizing the kneaded mixture.

The kneading conditions are as follows. In a base kneading step of kneading additives other than vulcanizing agents and vulcanization accelerators, the kneading temperature is usually 100 to 180°C, preferably 120 to 170°C. In a final kneading step of kneading vulcanizing agents and vulcanization accelerators, the kneading temperature is usually 120°C or lower, preferably 85 to 110°C. Then, the composition obtained after kneading vulcanizing agents and vulcanization accelerators is usually vulcanized by press vulcanization, for example. The vulcanization temperature is usually 140 to 190°C, preferably 150 to 185°C. The vulcanization time is usually 5 to 15 minutes.

<Tire>

The above-described rubber composition (tread rubber composition) is used in a tread portion of a tire.

Examples of tires applicable in the present invention include pneumatic tires and non-pneumatic tires, with pneumatic tires being preferred. In particular, summer tires, winter tires (e.g., studless winter tires, snow tires, cold weather tires, studded tires), and all-season tires are suitable. For example, the present tire may be used as a tire for passenger cars, large passenger cars, large SUVs, heavy duty vehicles such as trucks and buses, light trucks, or motorcycles, or as a racing tire (high performance tire). Among these, the tire is desirably used as a heavy duty tire. Herein, the term "heavy duty tire" refers to a tire with a normal internal pressure of higher than 300 kPa and a normal load of more than 1300 kg.

The tire can be produced from the above-described rubber composition by usual methods. For example, an unvulcanized rubber composition containing various materials may be extruded into the shape of a tread portion and then formed together with other tire components in a usual manner on a tire building machine to build an unvulcanized tire, which may then be heated and pressurized in a vulcanizer to produce a tire.

To better achieve the advantageous effect, the tire of the present invention desirably satisfies the following relationship:

$$PC \times G \geq 1500$$

wherein PC represents the polymer content (% by mass) of the tread rubber composition (vulcanized rubber composition) contained in the tread portion, and G represents the thickness (mm) of the tread portion measured on the equator in a cross-section taken in the radial direction of the tire.

The lower limit of the value of "PC × G" is preferably 1550 or higher, more preferably 1580 or higher, still more preferably 1588 or higher, particularly preferably 1600 or higher. The upper limit is preferably 2000 or lower, more preferably 1800 or lower, still more preferably 1700 or lower. When the value is within the range indicated above, the advantageous effect tends to be better achieved.

The mechanism of this advantageous effect is not clear but is believed to be as follows.

As described earlier, the polymer content is considered to be a factor that affects the amount of the polymer gel. Meanwhile, a tread portion with a smaller gauge has a higher rigidity and thus is less likely to be deformed and more likely to be worn away by the road surface. Hence, it is believed that by adjusting the product of the polymer content, which affects the amount of the polymer gel, and the gauge to a certain value or more, good abrasion resistance during high-speed running can be provided even when the thickness is small.

In the tire of the present invention, the thickness G (mm) of the tread portion measured on the equator in a cross-section taken in the radial direction of the tire is preferably 35 mm or less, more preferably 30 mm or less, still more preferably 29 mm or less, particularly preferably 28 mm or less, most preferably 27 mm or less. The lower limit is preferably 10 mm or more, more preferably 15 mm or more, still more preferably 18 mm or more, particularly preferably 20 mm or more. When the thickness is within the range indicated above, the advantageous effect tends to be better achieved.

Herein, the term "thickness G of the tread portion measured on the equator in a cross-section taken in the radial direction of the tire" refers to the distance from the tread surface to the interface of the belt-reinforcing layer, belt layer, carcass layer, or other reinforcing layer containing a fiber material, which is outermost with respect to the tire, as measured on the equator in a cross-section taken along a plane including the axis of the tire. Here, when the tread portion has a groove on the equator of the tire, the thickness G is the linear distance from the intersection of the equator and a straight line connecting the edges of the groove which are outermost in the radial direction of the tire.

In the tire of the present invention, the tread portion desirably has a negative ratio S (%) of 25% or lower.

S is preferably 22% or lower, more preferably 20% or lower, still more preferably 19% or lower, particularly preferably 18% or lower. The negative ratio is preferably 10% or higher, more preferably 15% or higher. When S is within the range indicated above, the advantageous effect tends to be better achieved.

Here, the negative ratio (negative ratio within the ground contact surface of the tread portion) refers to the ratio of the total groove area within the ground contact surface relative to the total area of the ground contact surface and is determined as described below.

Herein, when the tire is a pneumatic tire, the negative ratio is calculated from the contact patch of the tire under conditions including a normal rim, a normal internal pressure, and a normal load. When the tire is a non-pneumatic tire, the negative ratio can be similarly determined without the need of a normal internal pressure.

The term "normal rim" refers to a rim specified for each tire by the standard in a standard system including standards according to which tires are provided, and may be, for example, the standard rim in JATMA, "design rim" in TRA, or "measuring rim" in ETRTO.

The term "normal internal pressure" refers to an air pressure specified for each tire by the standard and may be the maximum air pressure in JATMA, the maximum value shown in Table "TIRE LOAD LIMITS AT VARIOUS COLD INFLATION PRESSURES" in TRA, or "inflation pressure" in ETRTO.

The term "normal load" refers to a load specified for each tire by the standard and may be the maximum load capacity in JATMA, the maximum value shown in Table "TIRE LOAD LIMITS AT VARIOUS COLD INFLATION PRESSURES" in TRA, or "load capacity" in ETRTO.

The contact patch may be determined by mounting the tire on a normal rim, applying a normal internal pressure to the tire, and allowing the tire to stand at 25°C for 24 hours, followed by applying black ink to the tread surface of the tire and pressing the tread surface against a cardboard at a normal load (camber angle: 0°) for transfer to the cardboard.

The transfer may be performed on the tire in five positions, each rotated by 72° in the circumferential direction. Namely, the contact patch may be determined five times.

The contour points of each of the five contact patches are smoothly connected to draw a figure, the area of which is defined as the total area, and the transferred area as a whole constitutes the ground contact area. The average of the results of the five positions is determined and then the negative ratio (%) is calculated by the equation: [1-{Average of areas of five contact patches transferred to cardboard (parts with black ink)}/{Average of five total areas transferred to cardboard (figures obtained from contour points)}] $\times$ 100 (%).

Here, the average length or area is the simple average of the five values.

In the tire of the present invention, the groove depth D of a circumferential groove formed in the tread portion is preferably 25 mm or less, more preferably 23 mm or less, still more preferably 22 mm or less, but is preferably 8 mm or more, more preferably 10 mm or more, still more preferably 12 mm or more. When D is within the range indicated above, the advantageous effect tends to be better achieved.

Herein, the groove depth D of the circumferential groove is measured along the normal of a plane extended from the outermost tread surface forming the ground contact surface, and refers to the distance from the plane extended from the surface forming the ground contact surface to the deepest groove bottom, which is the largest among the groove depths of the circumferential grooves provided.

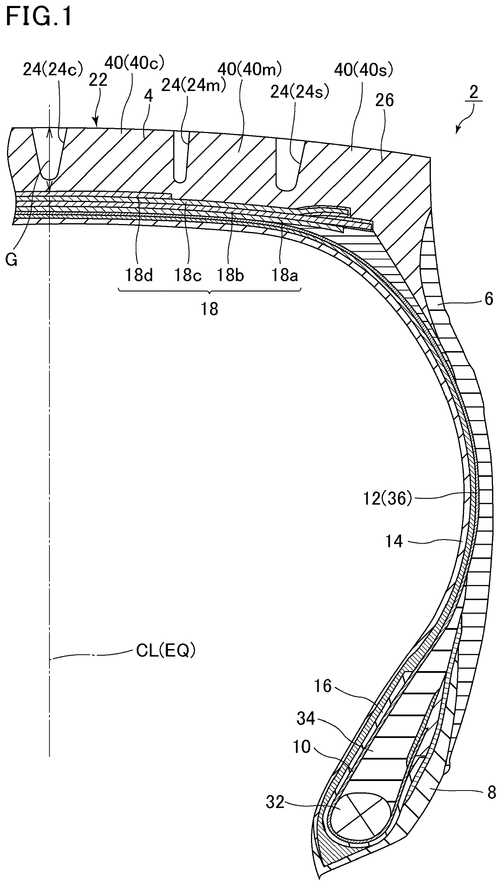

FIG. 1 shows a cross-section of a part of a pneumatic tire 2 according to one embodiment of the present invention taken in the meridional direction. Here, the tire of the present invention is not limited to the following embodiment.

FIG. 1 shows an example of a heavy duty pneumatic tire 2. In FIG. 1, the vertical direction corresponds to the radial direction of the tire 2, the horizontal direction corresponds to the axial direction of the tire 2, and the direction perpendicular to the paper corresponds to the circumferential direction of the tire 2. In FIG. 1, the center line CL of the tire 2 also represents the equator EQ of the tire 2. The shape of the tire 2 is symmetrical about the equator EQ, except for the tread pattern.

The tire 2 includes a tread portion 4, a sidewall portion 6, a chafer 8, a bead portion 10, a carcass 12, an innerliner 14, a filler 16, and a belt 18. The tire 2 is a tubeless tire.

The tread portion 4 has a radially outwardly convex shape. The tread portion 4 forms a tread face 22 that will contact the road surface. The tread face 22 is provided with five circumferential grooves 24 (hereinafter, also referred to as main grooves). The main grooves 24 consist of one center main groove 24c located in the axial center (substantially corresponding to the equator EQ), a pair of shoulder main grooves 24s located at opposite axially outer sides, and a pair of middle main grooves 24m each located between the center main groove 24c and the shoulder main groove 24s. The five main grooves 24c, 24m and 24s define six circumferentially extending ribs.

The six ribs are desirably each provided with axial grooves (lug grooves) (not shown). The main grooves 24 and the lug grooves (not shown) define a tread pattern with six rows of blocks 40, specifically, center blocks 40c, middle blocks 40m, and shoulder blocks 40s. Here, the shoulder main groove 24s, the center main groove 24c, and the shoulder groove 24s may not have the same width.

The sidewall portion 6 radially substantially inwardly extends from the end of the tread portion 4. The radially outer part of the sidewall portion 6 is bound to the tread portion 4. The radially inner part of the sidewall portion 6 is bound to the chafer 8. As is clear from FIG. 1, the sidewall portion 6 is located axially outward from the carcass 12. The sidewall portion 6 desirably consists of a crosslinked rubber.

The chafer 8 radially substantially inwardly extends from the sidewall portion 6. The chafer 8 will come into contact with a rim flange.

The bead portion 10 includes a core 32 and an apex 34 radially outwardly extending from the core 32. The core 32 has a ring shape and includes a wound inextensible wire. Typical examples of the material of the wire include steel. The apex 34 is radially outwardly tapered.

The carcass 12 consists of a carcass ply 36. The carcass ply 36 extends between the opposite bead portions 10 along the tread portion 4 and the sidewall portions 6. The carcass ply 36 is folded around the core 32 from the inside to the outside in the axial direction. The carcass ply 36 may consist of a large number of parallel cords and a topping rubber. The carcass 12 may be formed of two or more carcass plies 36.

The filler 16 is located near the bead portion 10. The filler 16 is stacked on the carcass 12. The filler 16 is folded around the core 32 of the bead portion 10 while being inside the carcass ply 36. The filler 16 may consist of a large number of parallel cords and a topping rubber.

The innerliner 14 is located inside the carcass 12. The innerliner 14 desirably consists of a crosslinked rubber.

In the cross-section shown in FIG. 1, the belt 18 extends in the axial direction. The belt 18 is located radially inward of the tread portion 4. The belt 18 is located radially outward of the carcass 12. The belt 18 reinforces the carcass 12. In the tire 2, the belt 18 includes four layers. The belt 18 consists of a first ply 18a, a second ply 18b, a third ply 18c, and a fourth ply 18d which are stacked in said order from the radially inside. The first ply 18a is stacked on the carcass 12 at the equator. Each ply may consist of a large number of parallel cords and a topping rubber. In the tire 2, the second ply 18b has the largest width in the axial direction among the four layers. In the tire 2, the fourth ply 18d has the smallest width in the axial direction among the four layers. The belt 18 may include three layers.

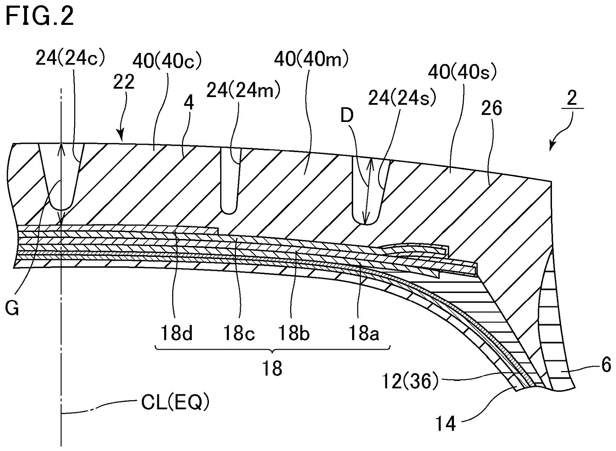

FIG. 2 shows an enlarged cross-section in the vicinity of a shoulder portion 26 of the tire 2 shown in FIG. 1.

In FIGs. 1 and 2, a crown center CL (the center line CL of the tire 2) located at the equator EQ corresponds to "the equator in a cross-section of the tread portion 2 taken in the radial direction of the tire".

The tire 2 desirably satisfies the relationship: $PC \times G \geq 1500$, wherein PC represents the polymer content (% by mass) of the tread rubber composition (vulcanized rubber composition) contained in the tread portion 4, and G represents the thickness of the tread portion 4 measured at the center line CL of the tire 2 (the radial dimension from the tread face 22 to the upper surface of the fourth ply 18d).

The tread portion 4 of the tire 2 includes circumferential grooves 24. In the tire 2, the groove depth D of the circumferential grooves 24 refers to the distance in the normal direction from a plane extended from the tread face 22 forming the ground contact surface to the deepest groove bottom and also refers to the depth of the deepest groove among the circumferential grooves 24 provided.

EXAMPLES

The present invention will be specifically described with reference to, but not limited to, examples.

The chemicals used in the examples and comparative examples are listed below.

NR: TSR20

SBR: NS616 (non-oil extended SBR, styrene content: 21% by mass, vinyl content: 66 mol%, Tg: -23°C, Mw: 240,000) available from Zeon Corporation

BR: BR150B (cis content: 97% by mass) available from Ube Industries, Ltd.

Carbon black: DIABLACK I (N220, $N_2SA$: 114 $m^2/g$, DBP: 114 mL/100 g) available from Mitsubishi Chemical Corporation

Silica 1: ZEOSIL 1115MP (average primary particle size: 25 nm, $N_2SA$: 115 $m^2/g$) available from Rhodia

Silica 2: Ultrasil VN3 (average primary particle size: 18 nm, $N_2SA$: 175 $m^2/g$) available from Evonik Degussa

Silica 3: 9100Gr (average primary particle size: 15 nm, $N_2SA$: 235 $m^2/g$) available from Degussa

Silica 4: ZEOSIL Premium 200MP (average primary particle size: 10 nm, $N_2SA$: 220 $m^2/g$) available from Rhodia

Silane coupling agent: Si266 (bis(3-triethoxysilylpropyl)disulfide) available from Evonik Degussa

Solid resin 1: YS Resin PX850 (softening point: 85°C, β-pinene resin (terpene resin)) available from Yasuhara Chemical Co., Ltd.

Solid resin 2: SYLVARES SA85 (copolymer of α-methylstyrene and styrene, softening point: 85°C) available from Arizona Chemical

Antioxidant: Antigene 6C (antioxidant, N-(1,3-dimethylbutyl)-N'-phenyl-p-phenylenediamine) available from Sumitomo Chemical Co., Ltd.

Wax: Ozoace 0355 available from Nippon Seiro Co., Ltd.

Stearic acid: TSUBAKI available from NOF Corporation

Zinc oxide: zinc oxide #2 available from Mitsui Mining & Smelting Co., Ltd.

Oil: PROCESS X-140 available from Japan Energy Corporation

Sulfur: powdered sulfur available from Tsurumi Chemical Industry Co., Ltd.

Vulcanization accelerator: NOCCELER NS (N-tert-butyl-2-benzothiazolylsufenamide) available from Ouchi Shinko Chemical Industrial Co., Ltd.

(Examples and Comparative Examples)

According to the formulation recipe shown in Table 1, the materials other than the sulfur and vulcanization accelerator are kneaded for five minutes at 150°C using a 1.7 L Banbury mixer (Kobe Steel, Ltd.) to give a kneaded mixture. Next, the sulfur and vulcanization accelerator are added to the kneaded mixture, and they are kneaded for five minutes at 80°C using an open roll mill to obtain an unvulcanized rubber composition. The unvulcanized rubber composition is formed into the shape of a tread portion and assembled with other tire components to build an unvulcanized tire. The unvulcanized tire is press-vulcanized at 150°C for 12 minutes to prepare a test tire (size: 315/80R22.5).

The test tires prepared as above are subjected to physical property measurements and evaluations as described below. The results are shown in Table 1. Here, the standard comparative examples in Table 1 are as follows.

Standard example for fuel economy: Comparative Example 1

Standard example for abrasion resistance during high-speed running: Comparative Example 3

<Acetone extractable content (AE)>

The amount of the substances extracted with acetone from a rubber specimen cut out of the tread of each test tire is measured by a method for measuring the acetone extractable content in accordance with JIS K 6229. Acetone extractable content (% by mass) = (Mass of sample before extraction - Mass of sample after extraction)/Mass of sample before extraction $\times$ 100

<Polymer content (PC)>

The decrease in the amount (mass) of the sample after the acetone extraction in the above section "Acetone extractable content (AE)" is measured when it is heated (from room temperature to 750°C) in nitrogen for pyrolysis and gasification of organic matter in accordance with JIS K 6226-1:2003, and PC (% by mass) is calculated therefrom.

<Carbon black content (BC)>

The decrease in the amount (mass) of the sample after the pyrolysis and gasification in the above section "Polymer content (PC)" is measured when it is heated in the air for oxidative combustion, and BC (% by mass) is calculated therefrom.

<Ash content (Ash)>

The mass of the components which remain unburned in the oxidative combustion (ash) in the above section "Carbon black content (BC)" is measured, from which Ash (% by mass) is calculated.

<Fuel economy (rolling resistance)>

Rolling resistance is measured using a rolling resistance tester under the following conditions.

Rim used: 9.00$\times$22.5

Internal pressure: 830 kPa

Load: 36.77 kN

Speed: 80 km/h

The measurement results are expressed as an index (fuel economy index) relative to that of the standard

**EP 4 197 805 B1**

comparative example taken as 100. A higher index indicates a smaller rolling resistance and better fuel economy.

<Abrasion resistance during high-speed running>

Each test tire mounted on a rim is installed on a rear wheel of a truck as a test car. A road test is conducted using the test car. The test conditions are as follows.

Rim used: 9.00×22.5
Tire internal pressure: 830 kPa
Running speed: 80 km/h
Running distance: 10,000 km

The groove depth of the test tire is measured after the running to determine the amount of wear from the start of running. The amount of wear of the tread portion is calculated from the measured depth and expressed as an index relative to that of the standard comparative example taken as 100. A higher index indicates a smaller amount of wear and better abrasion resistance during high-speed running.

[Table 1]

| | | Comparative Example | | | | | Example | | | | | | | | | | |
|---|---|---|---|---|---|---|---|---|---|---|---|---|---|---|---|---|---|
| | | 1 | 2 | 3 | 4 | 5 | 1 | 2 | 3 | 4 | 5 | 6 | 7 | 8 | 9 | 10 | 11 |
| Amount (parts by mass) | NR | 70 | 70 | 70 | 70 | 70 | 85 | 85 | 85 | 85 | 90 | 90 | 90 | 90 | 85 | 85 | 70 |
| | SBR | 30 | 30 | 30 | 30 | 30 | 15 | 15 | 15 | 15 | 10 | 10 | 10 | 10 | 15 | 15 | 10 |
| | BR | | | | | | | | | | | | | | | | 20 |
| | Carbon black | 25 | 25 | 25 | 25 | 25 | 15 | 15 | 15 | 10 | 15 | 10 | 10 | 20 | 15 | 15 | 15 |
| | Silica 1 (25 nm) | 50 | | | | | | | | | | | | | | | |
| | Silica 2 (18 nm) | | 50 | | | | | | | | | | | | | | |
| | Silica 3 (15 nm) | | | 50 | 50 | 50 | 40 | 40 | 40 | 45 | 40 | 45 | 45 | 40 | | 40 | 40 |
| | Silica 4 (10 nm) | | | | | | | | | | | | | | 40 | | |
| | Silane coupling agent | 3.0 | 3.0 | 3.0 | 3.0 | 3.0 | 4.0 | 4.0 | 4.0 | 4.5 | 4.0 | 4.5 | 4.5 | 4.0 | 4.0 | 4.0 | 4.0 |
| | Solid resin 1 | 5 | 5 | 5 | 5 | 5 | 1.5 | 1.5 | 1.5 | 1.5 | 1.5 | 1.5 | 1.0 | 2.2 | 1.5 | | 1.5 |
| | Solid resin 2 | | | | | | | | | | | | | | | 1.5 | |
| | Antioxidant | 2 | 2 | 2 | 2 | 2 | 2 | 2 | 2 | 2 | 2 | 2 | 1.5 | 1.5 | 2 | 2 | 2 |
| | Wax | 1 | 1 | 1 | 1 | 1 | 1 | 1 | 1 | 1 | 1 | 1 | 0.8 | 0.8 | 1 | 1 | 1 |
| | Stearic acid | 3 | 3 | 3 | 3 | 3 | 1.5 | 1.5 | 1.5 | 1.5 | 1.5 | 1.5 | 1 | 1 | 1.5 | 1.5 | 1.5 |
| | Zinc oxide | 4 | 4 | 4 | 4 | 4 | 4 | 4 | 4 | 4 | 4 | 4 | 4 | 4 | 4 | 4 | 4 |
| | Oil | | | | | 10 | | | | | | | | | | | |
| | Sulfur | 1 | 1 | 1 | 1 | 1 | 1 | 1 | 1 | 1 | 1 | 1 | 1 | 1 | 1 | 1 | 1 |
| | Vulcanization accelerator | 1 | 1 | 1 | 1 | 1 | 1 | 1 | 1 | 1 | 1 | 1 | 1 | 1 | 1 | 1 | 1 |
| Physical properties | AE (% by mass) | 6.5 | 6.5 | 6.5 | 4.0 | 11.0 | 4.9 | 4.9 | 4.9 | 4.9 | 4.9 | 4.9 | 4.2 | 4.8 | 4.9 | 4.9 | 4.9 |
| | PC (% by mass) | 51.9 | 51.9 | 51.9 | 53.3 | 49.4 | 58.8 | 58.8 | 58.8 | 58.8 | 58.8 | 58.7 | 59.1 | 57.1 | 58.8 | 58.8 | 58.8 |
| | Ash (% by mass) | 26.1 | 26.1 | 28.2 | 26.8 | 24.8 | 26.6 | 26.6 | 26.6 | 29.6 | 26.6 | 29.6 | 29.8 | 25.9 | 26.6 | 26.6 | 26.6 |
| | BC (% by mass) | 13.6 | 13.6 | 12.7 | 13.9 | 12.9 | 8.7 | 8.7 | 8.7 | 5.8 | 8.7 | 5.8 | 5.8 | 11.3 | 8.7 | 8.7 | 8.7 |
| | Thickness G (mm) | 25 | 25 | 25 | 25 | 25 | 25 | 27 | 27 | 27 | 27 | 27 | 27 | 28 | 27 | 27 | 27 |
| | PC × G | 1298 | 1298 | 1298 | 1333 | 1235 | 1470 | 1588 | 1588 | 1588 | 1588 | 1585 | 1596 | 1599 | 1588 | 1588 | 1588 |
| | Negative ratio S (%) | 25 | 25 | 25 | 25 | 25 | 25 | 25 | 18 | 18 | 18 | 18 | 18 | 18 | 18 | 18 | 18 |
| | Circumferential groove depth D (mm) | 20 | 20 | 20 | 20 | 20 | 20 | 22 | 22 | 22 | 22 | 22 | 22 | 23 | 22 | 22 | 22 |
| Evaluation | (a) Fuel economy | 100 | 99 | 98 | 98 | 98 | 108 | 108 | 112 | 117 | 112 | 110 | 110 | 120 | 113 | 115 | 120 |
| | (b) Abrasion resistance during high-speed running | 97 | 98 | 100 | 100 | 99 | 112 | 117 | 120 | 124 | 129 | 132 | 139 | 132 | 130 | 129 | 132 |
| | Overall performance (average of (a) and (b)) | 99 | 99 | 99 | 99 | 99 | 110 | 113 | 116 | 121 | 121 | 121 | 125 | 126 | 122 | 122 | 126 |

Excellent abrasion resistance during high-speed running is exhibited by the tires of the examples which contain predetermined amounts of rubber components including an isoprene-based rubber and SBR, silica having an average primary particle size of 15 nm or less, and a resin component and satisfy relationships (1) and (2).

**EP 4 197 805 B1**

REFERENCE SIGNS LIST

2 tire
4 tread portion
6 sidewall portion
8 chafer
10 bead portion
12 carcass
14 innerliner
16 filler
18 belt
22 tread face
24 circumferential groove
26 shoulder portion
32 core
34 apex
36 carcass ply
40 block
CL (EQ) equator
D groove depth of circumferential groove
G thickness of tread portion measured on equator in cross-section taken in radial direction of tire

**Claims**

1. A tire, comprising a tread portion,

   the tread portion comprising a rubber composition comprising: rubber components including at least one isoprene-based rubber and at least one styrene-butadiene rubber; at least one silica having an average primary particle size of 15 nm or less; and at least one resin component,
   the rubber composition comprising the isoprene-based rubber in an amount of 50% by mass or more based on 100% by mass of the rubber components and the silica in an amount of 30 parts by mass or more per 100 parts by mass of the rubber components,
   the tire satisfying the following relationships (1) and (2):

   $$(1) \quad PC \geq 55.0\% \text{ by mass};$$

   and

   $$(2) \quad AE \leq 5.0\% \text{ by mass},$$

   wherein PC and AE represent a polymer content (% by mass) and an acetone extractable content (% by mass), respectively, of the rubber composition,
   wherein the acetone extractable content is measured in accordance with JIS K 6229:2015, and
   wherein the polymer content is calculated from the decrease in the amount of a sample from the rubber composition remaining after the acetone extraction when it is heated from room temperature to 750°C in nitrogen for pyrolysis and gasification of organic matter in accordance with JIS K 6226-1:2003.

2. The tire according to claim 1, satisfying the following relationship:

   $$PC \times G \geq 1500,$$

   wherein PC represents the polymer content (% by mass) and G represents a thickness (mm) of the tread portion measured on an equator in a cross-section taken in a radial direction of the tire.

3.  The tire according to claim 1 or 2, satisfying the following relationship:

$$PC \geq 58.0\% \text{ by mass.}$$

4.  The tire according to any one of claims 1 to 3, satisfying the following relationship:

$$AE \leq 4.5\% \text{ by mass.}$$

5.  The tire according to any one of claims 2 to 4, satisfying the following relationship:

$$PC \times G \geq 1550.$$

6.  The tire according to any one of claims 2 to 5, satisfying the following relationship:

$$G \geq 20 \text{ mm.}$$

7.  The tire according to any one of claims 1 to 5,
    wherein the rubber composition comprises the isoprene-based rubber in an amount of 90% by mass or more based on 100% by mass of the rubber components.

8.  The tire according to any one of claims 1 to 7,
    wherein the rubber composition comprises the silica in an amount of 40 parts by mass or more per 100 parts by mass of the rubber components.

9.  The tire according to any one of claims 1 to 8,
    wherein the resin component includes a solid resin.

10. The tire according to any one of claims 1 to 9,
    wherein the tread portion has a negative ratio S (%) of 25% or lower; the negative ratio S being measured according to the description.

11. The tire according to any one of claims 1 to 10,
    wherein the tire has a circumferential groove having a groove depth D of 25 mm or less.

12. The tire according to any one of claims 1 to 11, which is a heavy duty tire.

**Patentansprüche**

1.  Reifen, umfassend einen Laufstreifenabschnitt,

    wobei der Laufstreifenabschnitt eine Kautschukzusammensetzung umfasst, welche umfasst: Kautschukkomponenten, die mindestens einen Isopren-basierten Kautschuk und mindestens einen Styrol-Butadien-Kautschuk enthalten; mindestens ein Siliciumdioxid mit einer mittleren Primärpartikelgröße von 15 nm oder weniger; und mindestens eine Harzkomponente,
    wobei die Kautschukzusammensetzung den Isopren-basierten Kautschuk in einer Menge von 50 Massen-% oder mehr, bezogen auf 100 Massen-% der Kautschukkomponenten, und das Siliciumdioxid in einer Menge von 30 Massenteilen oder mehr pro 100 Massenteile der Kautschukkomponenten umfasst,
    wobei der Reifen den folgenden Verhältnissen (1) und (2) genügt:

    $$(1) \quad PC \geq 55{,}0 \text{ Massen-\%;}$$

    und

    $$(2) \quad AE \leq 5{,}0 \text{ Massen-\%,}$$

wobei PC und AE einen Polymergehalt (Massen-%) beziehungsweise einen Aceton-extrahierbaren Gehalt (Massen-%) der Kautschukzusammensetzung darstellen,
wobei der Aceton-extrahierbare Gehalt gemäß JIS K 6229:2015 gemessen ist, und
wobei der Polymergehalt aus der Verringerung der Menge einer Probe aus der Kautschukzusammensetzung berechnet ist, die nach der Aceton-Extraktion zurückbleibt, wenn sie zur Pyrolyse und Vergasung organischer Materie gemäß JIS K 6226-1:2003 in Stickstoff von Raumtemperatur auf 750°C erhitzt wird.

2. Reifen nach Anspruch 1, der dem folgenden Verhältnis genügt:

$$PC \times G \geq 1500,$$

wobei PC den Polymergehalt (Massen-%) darstellt, und G eine Dicke (mm) des Laufstreifenabschnitts darstellt, gemessen auf einem Äquator in einem in einer Radialrichtung des Reifens genommenen Querschnitt.

3. Reifen nach Anspruch 1 oder 2, der dem folgenden Verhältnis genügt:

$$PC \geq 58{,}0 \text{ Massen-\%.}$$

4. Reifen nach einem der Ansprüche 1 bis 3, der dem folgenden Verhältnis genügt:

$$AE \leq 4{,}5 \text{ Massen-\%.}$$

5. Reifen nach einem der Ansprüche 2 bis 4, der dem folgenden Verhältnis genügt:

$$PC \times G \geq 1550.$$

6. Reifen nach einem der Ansprüche 2 bis 5, der dem folgenden Verhältnis genügt:

$$G \geq 20 \text{ mm.}$$

7. Reifen nach einem der Ansprüche 1 bis 5,
wobei die Kautschukzusammensetzung den Isopren-basierten Kautschuk in einer Menge von 90 Massen-% oder mehr umfasst, bezogen auf 100 Massen-% der Kautschukkomponenten.

8. Reifen nach einem der Ansprüche 1 bis 7,
wobei die Kautschukzusammensetzung das Siliciumdioxid in einer Menge von 40 Massenteilen oder mehr pro 100 Massenteile der Kautschukkomponenten umfasst.

9. Reifen nach einem der Ansprüche 1 bis 8,
wobei die Harzkomponente ein festes Harz enthält.

10. Reifen nach einem der Ansprüche 1 bis 9,
wobei der Laufstreifenabschnitt einen Negativanteil S (%) von 25% oder niedriger aufweist; wobei der Negativanteil S gemäß der Beschreibung gemessen ist.

11. Reifen nach einem der Ansprüche 1 bis 10,
wobei der Reifen eine Umfangsrille mit einer Rillentiefe D von 25 mm oder weniger aufweist.

12. Reifen nach einem der Ansprüche 1 bis 11, der ein Schwerlastreifen ist.

**Revendications**

1. Pneumatique, comprenant une portion formant bande de roulement,

la portion formant bande de roulement comprenant une composition de caoutchouc comprenant : des composants de caoutchouc incluant au moins un caoutchouc à base d'isoprène et au moins un caoutchouc styrène butadiène ; au moins une silice ayant une taille de particule primaire moyenne de 15 nm ou moins ; et au moins un composant de résine,

la composition de caoutchouc comprenant le caoutchouc à base d'isoprène dans une quantité de 50 % en masse ou plus sur la base de 100 % en masse des composants de caoutchouc, et la silice dans une quantité de 30 parts en masse ou plus pour 100 parts en masse des composants de caoutchouc,

le pneumatique satisfaisant aux relations (1) et (2) suivantes :

$$(1) \ PC \geq 55{,}0 \ \% \ en \ masse \ ;$$

et

$$(2) \ AE \leq 5{,}0 \ \% \ en \ masse,$$

PC et AE représentant une teneur en polymère (% en masse) et une teneur en acétone extractible (% en masse), respectivement, de la composition de caoutchouc,

dans lequel la teneur en acétone extractible est mesurée en accord avec la norme industrielle japonaise JIS K 6229:2015, et

dans lequel la teneur en polymère est calculée à partir de la diminution dans la quantité d'un échantillon de la composition de caoutchouc restant après l'extraction d'acétone quand il est chauffé depuis une température ambiante jusqu'à 750 °C dans de l'azote pour pyrolyse et gazéification d'une matière organique en accord avec JIS K 6226-1:2003.

2. Pneumatique selon la revendication 1, satisfaisant à la relation suivante :

$$PC \times G \geq 1 \ 500,$$

PC représentant la teneur en polymère (% en masse) et G représentant une épaisseur (mm) de la portion formant bande de roulement mesurée sur un équateur dans une section transversale prise dans une direction radiale du pneumatique.

3. Pneumatique selon la revendication 1 ou 2, satisfaisant à la relation suivante :

$$PC \geq 58{,}0 \ \% \ en \ masse.$$

4. Pneumatique selon l'une quelconque des revendications 1 à 3, satisfaisant à la relation suivante :

$$AE \leq 4{,}5 \ \% \ en \ masse.$$

5. Pneumatique selon l'une quelconque des revendications 2 à 4, satisfaisant à la relation suivante :

$$PC \times G \geq 1 \ 550.$$

6. Pneumatique selon l'une quelconque des revendications 2 à 5, satisfaisant à la relation suivante :

$$G \geq 20 \ mm.$$

7. Pneumatique selon l'une quelconque des revendications 1 à 5,
dans lequel la composition de caoutchouc comprend le caoutchouc à base d'isoprène dans une quantité de 90 % en masse ou plus sur la base de 100 % en masse des composants de caoutchouc.

8. Pneumatique selon l'une quelconque des revendications 1 à 7,
dans lequel la composition de caoutchouc comprend la silice dans une quantité de 40 parts en masse ou plus pour 100 parts en masse des composants de caoutchouc.

9. Pneumatique selon l'une quelconque des revendications 1 à 8,
dans lequel le composant de résine inclut une résine solide.

10. Pneumatique selon l'une quelconque des revendications 1 à 9,
dans lequel la portion formant bande de roulement a un rapport négatif S (%) de 25 % ou moins ; le rapport négatif S étant mesuré en accord avec la description.

11. Pneumatique selon l'une quelconque des revendications 1 à 10,
dans lequel le pneumatique a une rainure circonférentielle ayant une profondeur de rainure D de 25 mm ou moins.

12. Pneumatique selon l'une quelconque des revendications 1 à 11, qui est un pneumatique pour service intensif.

# FIG.1

FIG.2

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2021050355 A
- US 4414370 A
- JP S596207 A
- JP H558005 B
- JP H1313522 A
- US 5010166 A